# EUROPEAN PATENT APPLICATION

(11) **EP 1 069 521 A1**
(43) Date of publication of application: **17.01.2001**
(21) Application number: 99117477.2
(22) Date of filing: 10.09.1999
(51) Int. Cl.: G06F 17/60, A41H 3/00

(54) **Method for producing a marker**

(30) Priority: 12.07.1999 EP 99113624
(71) Applicant: Assyst - Gesellschaft für Automatisierung, Software und Systeme mbH, 85551 Kirchheim (DE)
(72) Inventor: Palfreyman, Niall, Dr., 85356 Freising (DE); Hohl, Dagmar, 81667 München (DE); Schurig Michael, 95666 Leonberg (DE)
(74) Representative: HOFFMANN - EITLE

(57) **Abstract**

The invention refers to a method for producing a marker by placing a number of piece-templates on a table. In order to provide a method which is flexible in use and which can be configured by the respective marker maker, the marker is defined by a first sequence of cluster-templates and a second sequence of piece-templates. The marker is laid by selecting and removing the piece-templates and the cluster-templates from the corresponding sequences, wherein for each cluster-template a placement field is defined which specifies the placement position of the piece-template currently being placed in said cluster-template.

## Description

The invention refers to a method for producing a marker by placing a number of piece-templates on a table.

In the garment industry it is necessary to cut pieces of clothing from a so-called marker, and the laying of these pieces on the marker in an efficient manner is of major importance for the industry, since this saves costs by increasing material utilisation. It is not possible to perform a single precalculation the contours of the pieces in the marker, since the contours depend on the instantaneous position of the individual pieces. It is therefore necessary to recalculate the piece positions in a marker before each cut depending on various background constraints.

Formerly the placing of the individual pieces of clothing was carried out by placing so-called templates on the marker by a person who is named a "marker-maker". The marker-maker moved the templates on the marker backwards and forwards until a satisfactory material utilisation of the marker resulted.

Today this process of marker-making is carried out with the aid of a computers.

From EP 0 664 091 A1 a computerised marker-making method is known in which the creation of a new marker is facilitated through the use of already existing marker designs. A computer data base of existing markers is searched for markers that are "similar" to the marker being created. An existing marker is considered "similar" if it meets certain user-specified, marker making criteria. Initially, position and orientation data from pattern pieces in the "similar" marker are used to position and orientate corresponding pieces in the marker. Then, the marker is "compacted" using a software routine to nest all of the new pieces simultaneously, instead of nesting one or two pieces at a time. The compacting routine corrects overlaps between pieces and ensures that the new pieces are nested as efficiently as possible.

The computer program provides a marker on a screen and/or on a large piece of paper, which can be spread out on the respective table. The so-called table consists of a stack of individual widths of cloth, which are processed by the cutter by means of an automatic knife. The specially designed knife consists, similarly to a scroll saw, of a specially positioned blade, which carries out small vertical upwards and downwards movements. It is ensured by a special guidance of the knife that the knife is always moved vertically and that therefore no inclined cut results through the stack of the individual widths of the cloth. In addition, there are meanwhile automatic cutting machines by means of which the knife is automatically controlled depending on the marker which has been computed.

Depending on the cutting process concerned, i.e. either manual operation by a human cutter or by an automatic cutting device, there are various constraints in the laying of the marker which must be considered. For example, in the laying of a marker for a human cutter it must be considered that it is not possible for the cutter abruptly to end the cut on a cut line. On the contrary, at the end of the cut line a so-called buffer zone must be provided, which makes it possible for the cutter to slow down his knife within this buffer zone, without cutting into other pieces of cloth. This is particularly the case with very acute corners in the piece shape. Such constraints are known as "buffering constraints".

Another example is the cutting of curves. For a right-handed person it is simpler to cut curves anticlockwise than clockwise. In addition, it is easier for a cutter to cut curves which are to the right of the body than curves to the left.

In the case of the automatic cutter, for example, it must be taken into consideration that the individual pieces must be sorted after cutting into so-called "bundles", in which a "bundle" constitutes a quantity of pieces of clothing which belong to a common article of clothing. To that extent it is an advantage if the pieces belonging to one "bundle" are assembled as compactly as possible on the table or on the stack of widths of cloth, so that they can be easily sorted out after cutting.

One problem with existing automatic marker-making programs is that they are inflexible and cannot be configured by human operators. Such configuration of the laying process can be vital in order to achieve requirements of speed and efficiency of laying.

When laying a marker there are three considerations which are of particular importance to the success of the marker: the quality of the marker layout, the speed with which the marker is laid, and the utilisation of material. In different applications these considerations play a significantly different role. The weighting of these three considerations is explained below in more detail:

There are clothing manufacturers who attach particular value to the alignment of a pattern on the individual clothing pieces. This may, for example, be the case with high quality ladies' clothing. When laying such markers, special importance has to be attached to constraints on permitted geometrical configurations of the pieces, whereas the aspects of material utilisation or the speed of laying are of only secondary importance.

A further example is the laying of markers for low-priced material pieces, such as e.g. the inside pockets of jeans. Here neither a special pattern quality nor a specially optimised use of the cloth is important, but the automatic marker-making program must lay the marker as quickly as possible to avoid delays in production.

In the production of certain mass consumption goods, e.g. jeans, it is also important that an optimal utilisation of the material is ensured, since economy in a small batch can lead to long-term savings. It has been found that the effort involved in improving the utilisation when laying a marker increases more than proportionally with the utilisation already achieved. So from a certain degree of yield onwards, the effort needed for further improvement of the marker being laid is no longer defensible in view of the small improvement which would thereby be obtained. Such considerations are also assessed by the human marker-maker while laying a marker, and play a significant role in optimising the layout of the marker.

Therefore, it is advantageous to make use of the experience of marker makers and to define certain starting conditions in the compilation of the marker, which have proved themselves in this respect. Due to the determination of these start conditions, the probability that high exploitation is achieved with the respective marker is substantially increased. In this way it can be ensured that almost optimal utilization can be achieved by the automatic maker program in a period which is at least still acceptable (i.e. maximally some minutes or hours).

It is therefore an object of the invention to provide a method for laying a marker by placing a number of piece-templates on a table which is flexible and which can be configured by a human operator.

This object by the features according to claim 1. The inventive solution is based on the cognition that the piece-templates are not placed directly onto the table, but rather that in a pre-step the table is divided into several cluster-templates. The cluster-templates are placed in a first sequence, wherein a placement specification for each cluster-template unambiguously specifies the placement position of the cluster-template currently being placed on the table. The piece-templates are sorted in a second sequence wherein placement relations defined on each cluster-template specify those piece-templates from the second sequence which may be placed in said cluster-template. The piece-templates are placed from the head of the second sequence on the table in accordance with the corresponding placement field and with the corresponding placement relation.

The advantage of the invention is that by means of the cluster-template, the placement fields defined for each cluster-template, and the placement relations defined on the second sequence with regard to each cluster-template, the method can be adapted to all possible demands with respect to the quality marker layout, the speed with which the marker is laid, and the material utilisation. Once these constraints and data have been defined, it is possible to place a number of given piece-templates very efficiently on the table.

It has to be noted that it is not in general possible to obtain such a solution merely by trial and error until the best solution is found. It can be shown that even the simplified form of the marking problem, in which rotations and reflections of the piece-templates are ignored, is NP-complete. This means that it is not possible to find a composite solution or a composite algorithmic method which will find an optimum solution of the general marking problem within any kind of acceptable time.

In accordance with one aspect of the present invention, for each cluster-template the degree of material utilisation is determined and if a predetermined degree of utilisation is not achieved, the following step k) is performed:
k) The piece-templates are removed from the cluster-template, and are then reinserted into the second sequence in a new configuration.

Hence, if in a first trial the respective cluster-template could not be satisfactorily filled, in a next trial a reconfiguration of the second sequence takes place and a new trial for filling the respective cluster-template begins. This reconfiguration can be performed by a random generator and can additionally be influenced by certain constraints.

The repeating of step k) can be controlled under various constraints. One possibility is that the step k) is repeated until a predetermined degree of utilisation is achieved. However, if the degree of utilisation is predetermined there is the problem that the computation time might go beyond reasonable values. Therefore, advantageously the iteration of step k) is also stopped if a predetermined computational investment (defined either in terms of time or number of computer operations) has been exceeded. Another possibility is that step k) is repeated for a predetermined computation time independently of the degree of utilisation which is achieved in each step, wherein after the computation time elapses the configuration with the best degree of utilisation is selected.

In accordance with a further aspect of the present invention, a placement field affects the placing of each piece-template within said cluster-template such that the planar center of gravity of the respective piece-template takes its most ultimate position subject to the placement field within said cluster-template. According to this aspect the placement field can be regarded as a force acting on a piece-template, wherein the piece-template can be regarded as a charge. The direction of force is defined by the field vector at the respective position of the charge or the piece-template respectively. As to the most ultimate position, the piece-templates already being laid have also to be considered. Having such a realization of a placement field, the placement position of the piece-template currently being placed in a cluster-template can be specified.

It has to be noted that there are types of placement fields in which the placement position is unambiguously specified and types of placement fields in which the placement position depends on the position where the placement field is placed firstly on the cluster-template.

Hence, a placement field can be defined by any suitable field type. According to one aspect of the invention, a placement field is defined by a placement source having an effect similar to a point charge. Depending on the polarity of the point charge, the point charge can have a repellent effect or an attractive effect. Furthermore, the field intensity can vary depending on the respective line of flux. Naturally, the placement field also can be defined by a group of placement sources, wherein each placement source has an effect similar to a point charge and wherein the placement field is a superposition of the fields of each placement source.

In accordance with another aspect of the present invention, the placement field is defined by a divergence-free field. A divergence-free field is not definable in terms of point sources, but is solely defined by its lines of flux. In particular, a rotational field can be regarded as a divergence-free field. Accordingly, the placement field can also be defined by a group of divergence-free fields, wherein the placement field is a superposition of the divergence-free fields.

It has to be noted that the placement field can be a steady-state field or also an unsteady field. In case of a steady-state field, the lines of flux of the placement field remain constant during all placement operations. However, in case of an unsteady field, it is possible that the placement field varies in accordance with certain parameters of the placement operation. In particular, it can be considered that the placement field varies in accordance with the degree of utilization already achieved within a cluster-template and/or in accordance with the computational investment already spent on the placing within a cluster-template. According to another aspect, the placement field can vary according to the current configuration of the piece-templates. As an example, each piece-template can be regarded as a field source, wherein the placement field is a superposition of the placement field as originally provided for the cluster-template and of the fields of each piece-template. The fields of the piece-templates within a cluster-template can have a repellent effect and/or an attractive effect to each other. Hence, by chosing the individual field type of each piece-template various possible configurations of an unsteady field varying according to the current configuration of piece-templates is possible.

An important aspect of the invention is the fact that by dividing up the marker problem into cluster-templates and placement relations on the cluster-template, a dynamic balance can be achieved between the competing considerations of computation time and material utilisation. Very briefly, a "narrow focus" with regard to the cluster-templates operates fast, but not exhaustively, whereas a "wide focus" with regard to the cluster-templates makes available more placement combinations and therefore operates exhaustively, but slowly. The balancing of narrow and wide focus is also applicable to the placement relations. Accordingly, a "narrow focus" with regard to the placement relations operates also "fast, but not exhaustively", whereas a wide focus with regard to the placement relations makes available more degrees of freedom with regard to the placement combinations and therefore operates "exhaustively, but slowly". Therefore, the computation time is decreased if the area of the cluster-templates is decreased and the number of cluster-templates is correspondingly increased. Conversely, the degree of material utilisation is increased if the area of the cluster-templates is increased and the number of the cluster-templates correspondingly decreased. Furthermore, the degree of material utilisation is increased if the restrictions on the placement relations are decreased. Conversely, the computation time is decreased if the restrictions on the placement relations are increased.

In accordance with a further aspect of the present invention, the piece-templates in the second sequence are associated with constraints on the placement of each piece-template. Such constraints can take several different forms, for example: Rotation and reflection constraints forbid or constrain the permitted rotations and reflections which can be performed on the piece-templates. Buffering constraints limit the extent to which two piece-templates can be laid adjacently to each other. Glueing constraints enable piece-templates to be placed and moved while maintaining a constant adjacency requirement to each other. Commonlining constraints enable buffering constraints to be disabled in order to permit piece-templates to share a common boundary in the marker. Zone constraints enforce restrictions on the relative and absolute positions of piece-templates. Some piece-templates must lie close to each other, whereas others must lie separate from each other; some piece-templates must lie close to given marker regions, whereas others must not lie in such marker regions.

Other objects and features of the invention will become apparent by reference to the following specification and to the drawings.

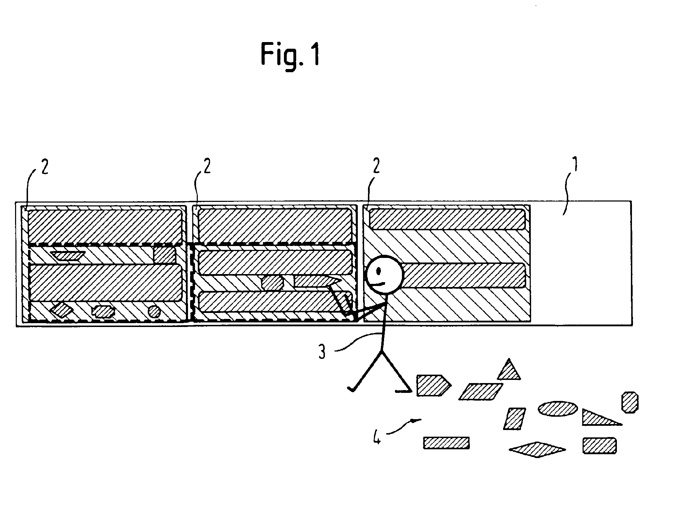

Fig. 1 shows the overall situation for placing a number of piece-templates on a table. The table 1 is subdivided by several cluster-templates 2. A number of piece-templates 4 are available for the marker maker 3 who tries to place the optimum combination of piece-templates on the table 1. This situation is similar to the situation in which the marker maker 3 is substituted by a computer, wherein all the data of the table-definitions, the cluster-templates and the piece-templates are stored within the computer and wherein the computer performs the placing of the piece-templates using the method according to the invention.

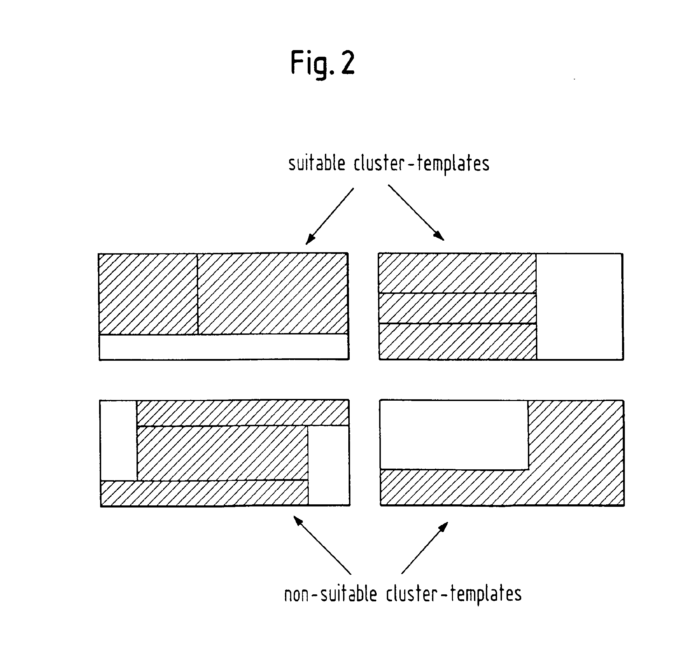

Fig. 2 illustrates possible configurations of cluster-templates. The cluster-templates are rectangular areas of the table, wherein the cluster-templates can overlap each other. The table is first divided up into large-scale cluster-templates, wherein these components are then divided into smaller cluster-templates, and finally even smaller cluster-templates can be defined which are overlaid on top of the existing cluster-template for laying smaller groups of piece-templates in a particular area.

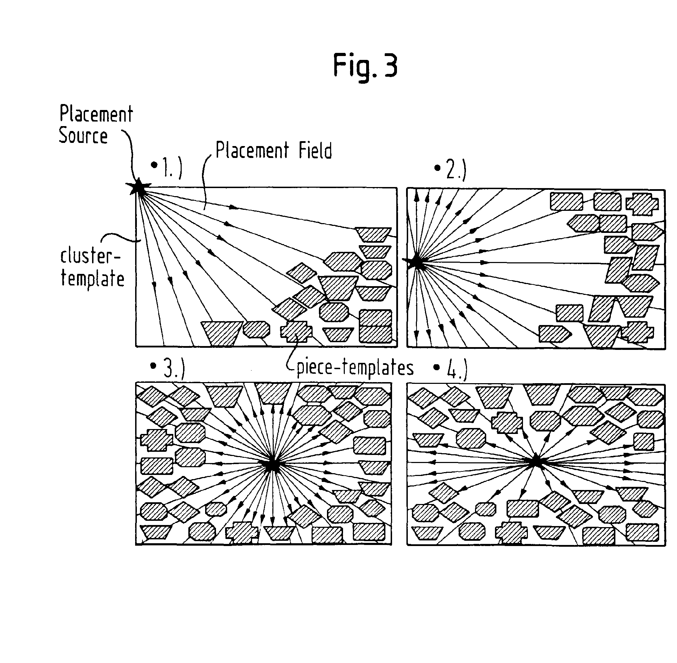

Fig. 3 shows the effect of a placement field defined by a repelling placement source which constitutes a point-source. Thus, each piece-template shows an equivalent effect like a charge with regard to a repelling point charge. Fig. 3 shows examples of four different cases of positioning the placement source and adjusting the field intensity in various directions.

Case 1) shows a placement source positioned at the top left corner of the cluster-template. The placement field is a uniform field of the placement source with regard to all directions. Accordingly, the piece-templates are pushed in direction to the right bottom corner of the cluster-template.

Case 2) shows a placement source positioned in the middle of the left side of the cluster-template. The resulting field of the placement source is the same as in case 1). However, due to the different position of the placement source, the piece-templates are pushed in direction to the right side of the cluster-template.

Case 3) shows a placement source positioned in the very middle of the cluster-template. Again, the resulting field corresponds to the placement fields according to the cases 1) and 2). However, due to the different position of the placement source, all piece-templates are now pushed away from the middle to the sides and corners of the cluster-template.

Eventually, case 4) shows a placement source also positioned in the very middle of the cluster-template, but having a nonuniform field. With regard to the horizontal axis the field strength is increased, whereas with regard to the vertical axis the field strength is decreased. Accordingly, the resulting position of the piece-templates is different from case 3). The piece-templates are pushed preferably to the top side and the bottom side of the cluster-template, whereas the area around the horizontal centre line is kept clear until all piece-templates are laid in the upper and in the lower area.

All in all, Fig. 3 gives an example how a plurality of different placement schemes can be realized by the appropriate definition of the placement field.

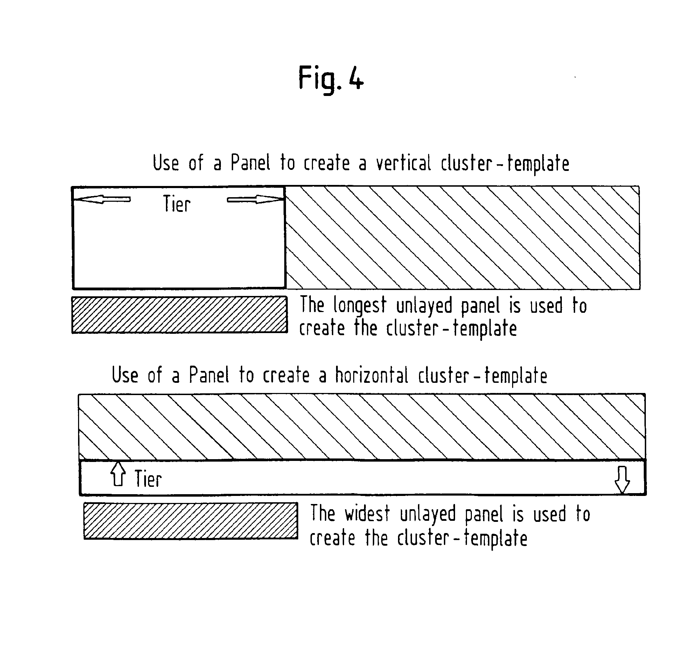

Fig. 4 shows the definition of a cluster-template by means of a piece-template, wherein the piece-template is of the type "panel". This definition has the advantage that the respective piece-template exactly fits within one cluster-template and thus the degree of utilisation can be optimised more easily.

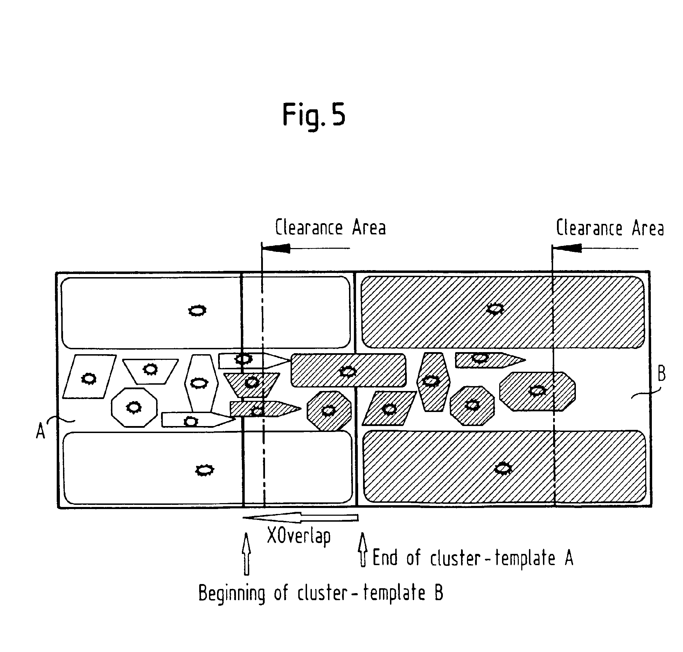

Fig. 5 shows the definition of two cluster-templates with overlapping boundaries. Furthermore, a clearance area is defined. A sensible definition of the clearance area is such that it is not permitted to place a piece-template with its "centre of gravity" within the clearance area. The purpose of this clearance area is to avoid small piece-templates being placed in the very edge of a cluster-template. If small piece-templates would be placed there, they would maybe block the area that could be used for a bigger piece-template when laying the piece-templates in the next cluster-template. On the other hand, cluster-templates may overlap into each other. Fig. 5 shows an overlap from the right cluster-template to the left side. This overlap permits piece-templates which are supposed to be laid in the second cluster-template to protrude into the free area of the first cluster-template. This overlap is especially needed when a clearance area is defined. With an overlap to the left or to the right the clearance area from a neighbouring cluster-template can be covered.

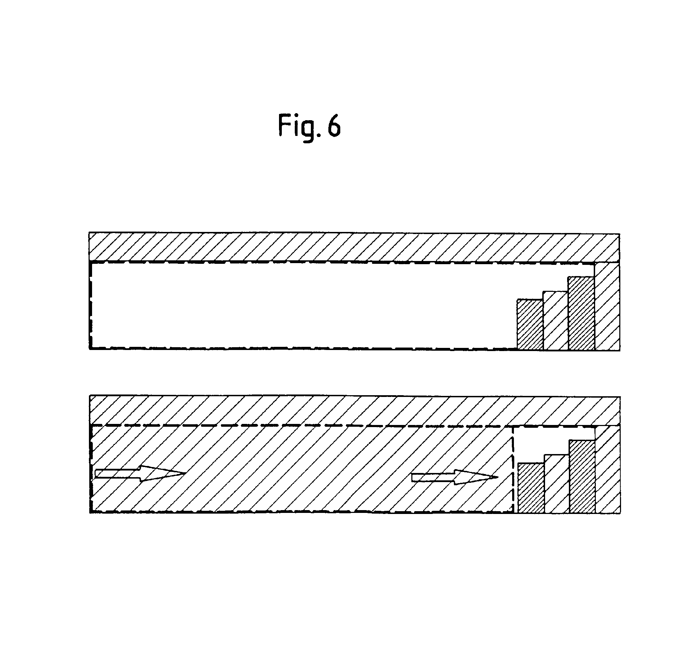

Fig. 6 shows a cluster-template whose borders were newly defined after placing a number of piece-templates. This means, after placing a number of piece-templates in a cluster-template, the borders of the cluster-template get adjusted to the laid piece-templates.

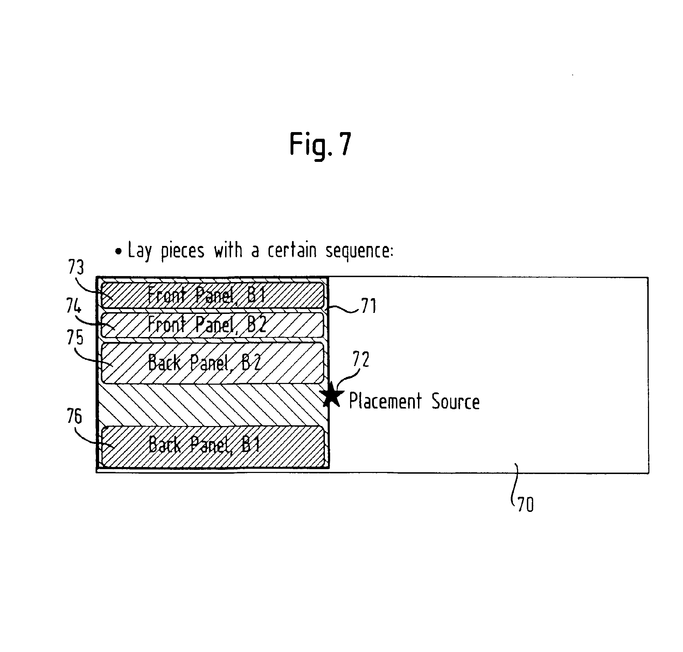

Fig. 7 shows a laid sequence of piece-templates within a cluster-template. Within the table 70 a cluster-template 71 is defined with a placement source 72 and a resulting placement field. The piece-templates 73, 74, 75 and 76 are laid in the following sequence:
front panel B1 73, front panel B2 74, back panel B1 76 and back panel B2 75.

Depending on this sequence the piece-templates are placed as required.

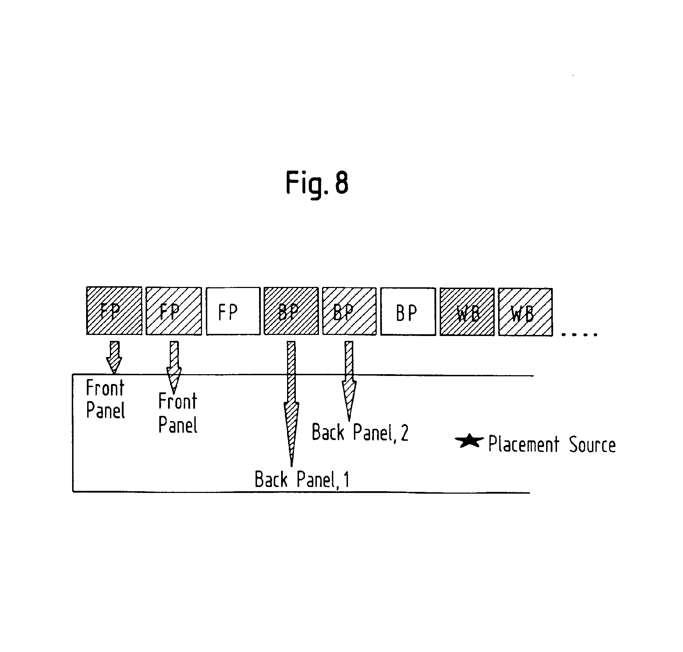

Fig. 8 shows again the same situation as in Fig. 7, but now with regard to the sequence in which the piece-templates are arranged. Within this sequence only the piece-templates marked by arrows have a placement relation with regard to the respective cluster-template and therefore only these piece-templates are placed within the cluster-template. As a result, the arrangement according to Fig. 7 comes up.

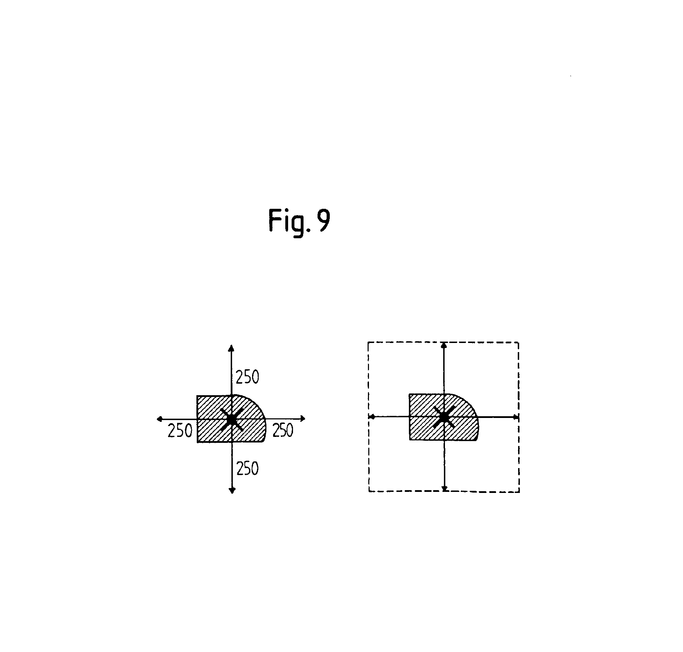

Fig. 9 shows the definition of certain buffer zones of a piece-template. These buffer zones might be necessary because it is not possible for a cutter abruptly to end a cut on a cut line. Therefore a buffer zone must be provided which makes it possible for the cutter to slow down his knife within this buffer zone without cutting into other piece-templates.

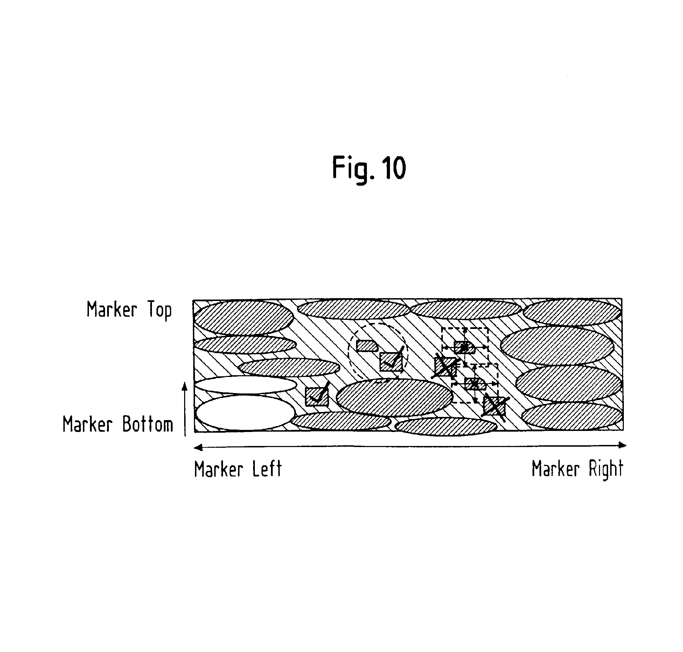

Fig. 10 shows the effect of this buffer zone within a cluster-template. Attempted piece-template placements which are would intrude into the buffer zone are not allowed, wherein if there is no buffer zone defined then neighbouring piece-templates can be arranged as close to each other as desired.

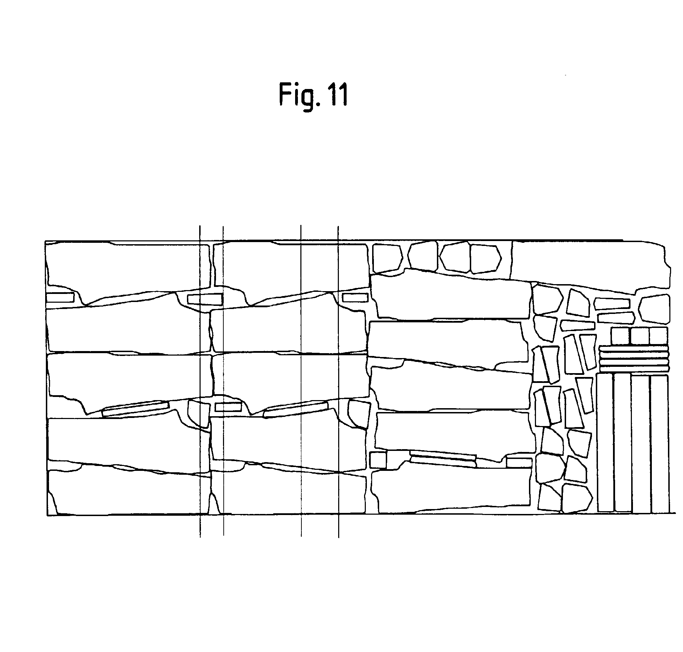

Fig. 11 shows the result of a so-called "jeans marker" which typically consists of patterns like panels, waistbands, pockets, watch pockets etc. As it can be seen at the lefthand side, there are defined two cluster-templates which are defined by the length of a panel. Furthermore at the bottom-right of the table there is a cluster-template solely defined by a group of waistbands. The rest of the panels are laid by optimising the configuration between the panels and the group of pockets.

## Claims

1. Method for producing a marker by placing a number of piece-templates on a table, said marker being defined by the following data:
a) a first sequence of cluster-templates, each cluster-template defining permitted geometrical boundaries within the marker,
b) a second sequence of piece-templates,
c) a placement specification for each cluster-template which specifies the placement position of the cluster-template currently being placed on the table,
d) a placement field defined for each cluster-template which specifies the placement position of the piece-template currently being placed in said cluster-template,
e) a set of placement-relations defined on each cluster-template, which specify those piece-templates from the second sequence which may be placed in said cluster-template,
comprising the steps of:
f) selecting and removing a cluster-template from the head of the first sequence and placing said cluster-template on the table in accordance with the corresponding placement specification,
g) selecting and removing the first piece-template from the head of the second sequence which satisfies the placement-relations corresponding to the cluster-template selected in step f) and placing said piece-template in this cluster-template in accordance with the corresponding placement field,
h) repeat step g) until no further piece-template can be placed,
i) repeat steps f) to h) until no further piece-template can be placed.

2. Method according to claim 1, wherein
j) for each filled cluster-template the degree of utilisation is determined and if a predetermined degree of utilisation is not reached step k) is performed,
k) the piece-templates are removed from the cluster-template, and are then reinserted into the second sequence in a new configuration.

3. Method according to claim 2, wherein step k) is repeated until the predetermined degree of utilisation is achieved.

4. Method according to one of the claims 2 - 3, wherein step k) is repeated until a predetermined computational investment has been exceeded.

5. Method according to claim 2, wherein step k) is repeated up to a maximum predetermined computational investment and wherein after the computational investment is exceeded the configuration with the best degree of material utilisation is selected.

6. Method according to one of the claims 1-5, wherein a placement field affects the placing of each piece-template within said cluster-template such that the planar center of gravity of the respective piece-template takes its most ultimate position subject to the placement field within said cluster-template.

7. Method according to claim 6, wherein a placement field is defined by a placement source having an effect similar to a point charge.

8. Method according to claim 6, wherein a placement field is defined by a group of placement sources, wherein each placement source has an effect similar to a point charge and wherein the placement field is a superposition of the fields of each placement source.

9. Method according to claim 6, wherein a placement field is defined by a divergence-free field.

10. Method according to claim 6, wherein a placement field is defined by a group of divergence-free fields, wherein the placement field is a superposition of the divergence-free fields.

11. Method according to claim 9 or 10, wherein the divergence-free field is a rotational field.

12. Method according to one of the claims 1 - 11, wherein the placement field is a steady-state field.

13. Method according to one of the claims 1 - 11, wherein the placement field is an unsteady field.

14. Method according to claim 13, wherein the placement field varies in accordance with the degree of utilisation already achieved within a cluster-template.

15. Method according to claim 13 or 14, wherein the placement field varies in accordance with the computational investment already spent on the placing within a cluster-template.

16. Method according to one of the claims 13 - 15, wherein the placement field varies according to the current configuration of piece-templates.

17. Method according to claim 16, wherein each piece-template is regarded as a field source and wherein the placement field is a superposition of the placement field as originally provided for the cluster-template and of the fields of each piece-template.

18. Method according to claim 17, wherein the fields of the piece-templates have a repellent effect and/or an attractive effect to each other.

19. Method according to one of the claims 1 - 18, wherein the area of the cluster-templates is decreased and the number of the cluster-templates is increased accordingly in order to decrease the computation time.

20. Method according to one of the claims 1 - 18, wherein the area of the cluster-templates is increased and the number of the cluster-templates is decreased accordingly in order to increase the degree of utilisation.

21. Method according to one of the claims 1 - 20, wherein the restrictions on the placement relations are decreased in order to increase the degree of utilisation.

22. Method according to one of the claims 1 - 20, wherein the restrictions on the placement relations are increased in order to decrease the computation time.

23. Method according to one of the claims 1 - 22, wherein the piece-templates in the second sequence are associated with constraints on the placement of each piece-template.

24. Method according to claim 23, wherein rotation and reflection constraints are provided for forbidding or constraining the permitted rotations and reflections which can be performed on the piece-templates.

25. Method according to claim 23 or 24, wherein buffering constraints are provided for limiting the extend to which two piece-templates can be laid adjacently to each other.

26. Method according to one of the claims 23 - 25, wherein glueing constraints are provided for enabling piece-templates to be placed and moved while maintaining a constant adjacency requirement with respect to each other.

27. Method according to one of the claims 23 - 26, wherein common lining constraints are provided for enabling buffering constraints to be disabled in order to permit piece-templates to share a common boundary in the marker.

28. Method according to one of the claims 23 - 27, wherein zone constraints are provided for enforcing proximity restrictions on the relative and absolute positions of piece-templates.

29. Storage means for storing software to be loaded by a processing means, wherein the software comprises code portions for performing the steps according to one of the claims 1 to 28 by the processing means.
